# EUROPÄISCHE PATENTSCHRIFT

(11) **EP 0 479 776 B1**
(45) Veröffentlichungstag und Bekanntmachung des Hinweises auf die Patenterteilung: **27.10.1993**
(21) Anmeldenummer: 89902027.5
(22) Anmeldetag: 11.02.1989
(51) Int. Cl.: B23Q 11/00, B27C 5/10

(54) **FRÄSE**
MORTISING MACHINE
FRAISEUSE

(30) Priorität: 27.02.1988 DE 3806311
(43) Veröffentlichungstag der Anmeldung: 15.04.1992
(73) Patentinhaber: ROBERT BOSCH GMBH, 70442 Stuttgart (DE)
(72) Erfinder: REMMELE, Bernhard, D-7000 Stuttgart 80 (DE); MÜLLER, Joachim, D-7000 Stuttgart 70 (DE); SMITH, Kenneth, Baybord, NC 28515 (US)
(86) Internationale Anmeldenummer: DE8900082
(87) Internationale Veröffentlichungsnummer: WO8908004

(56) Entgegenhaltungen:
- DE-A- 3 126 511
- DE-U- 8 609 919
- US-A- 2 944 465
- US-A- 3 971 294

## Beschreibung

Die Erfindung geht aus von einer Fräse nach der Gattung des Hauptanspruchs. Es ist schon eine Fräse bekannt (DE-U-8609919), die mit einer Spanabsaugeinrichtung versehen ist, die einen Anschlußstutzen und eine an einer Spänefanghaube angeordnete erste Absaugmündung aufweist. Aufgrund der Anordnung der Spänefanghaube kann eine derartige Spanabsaugeinrichtung lediglich bei Fräsen zur Bearbeitung der Kantenbereiche von Werkstücken Anwendung finden.

### Vorteile der Erfindung

Die erfindungsgemäße Fräse mit den kennzeichnenden Merkmalen des Anspruchs 1 hat demgegenüber den Vorteil, daß sie eine Spanabsaugeinrichtung aufweist, die eine Bearbeitung des Werkstücks auch außerhalb des Werkstück-Kantenbereichs, insbesondere unter Herstellung nutartiger Ausnehmungen, bei gleichzeitiger Absaugung nahezu aller Späne ermöglicht. Eine erfindungsgemäß vorgesehene zweite Absaugmündung ist verschließbar ausgebildet, so daß bei Nichtgebrauch dieser zweiten Absaugmündung eine Fehlluftansaugung vermeidbar ist und die vorhandene Saugleistung konzentriert eingesetzt wird. Durch die in den Ansprüchen 2 ff. aufgeführten Maßnahmen sind vorteilhafte Weiterbildungen und Verbesserungen der in Anspruch 1 angegebenen Fräse möglich. Besonders vorteilhaft ist die Ausbildung eines den Austritt der Späne durch die gefräste Nut verhindernden verformbaren Körpers als Besen, der höhenverstellbar an der Rückwand der zweiten Absaugmündung angeordnet ist und in die gefräste Nut bis an deren Grund einführbar ist. Das mehrstufige Sägezahnprofil in der Rückwand der Absaugmündung ist einfach herzustellen und ermöglicht eine einfache Bedienung der Höhenverstellung. Außerdem ist der Besen leicht auswechselbar. Der Ansaugstutzen mit der Zweiten Absaugmündung wird mit der Spanabsaugeinrichtung in einfacher Weise dadurch verbunden, daß er mittels zweier elastischer, einstückig mit dem Ansaugstutzen verbundenen Klemmarme an einem rohrförmigen Mittelteil der Absaugeinrichtung lösbar festgeklemmt ist. Dies bringt den zusätzlichen Vorteil, daß der Ansaugstutzen leicht weggedreht werden kann, falls er nicht gebraucht wird und die Öffnung im Mittelteil gleichzeitig verschlossen wird.

### Zeichnung

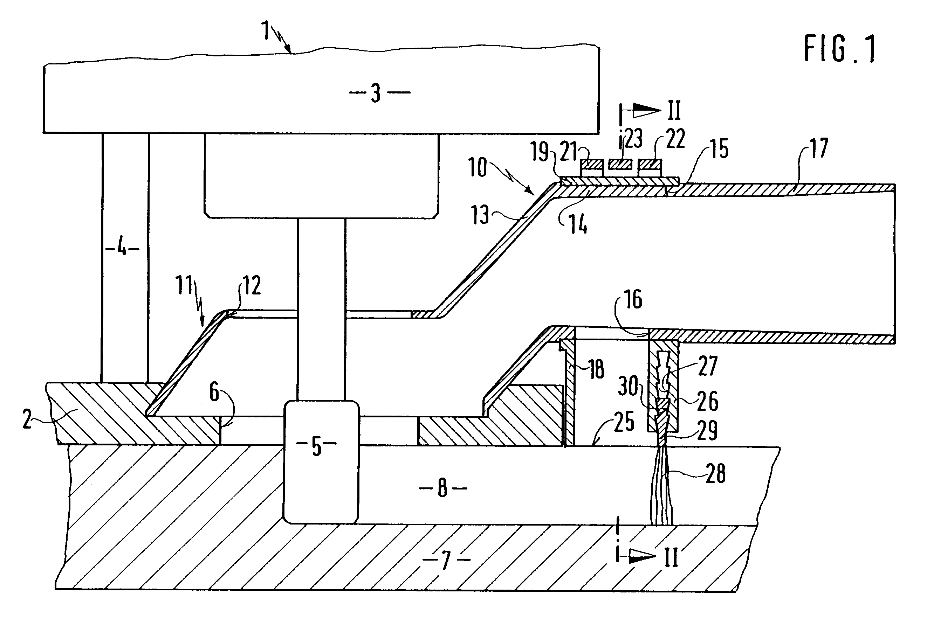

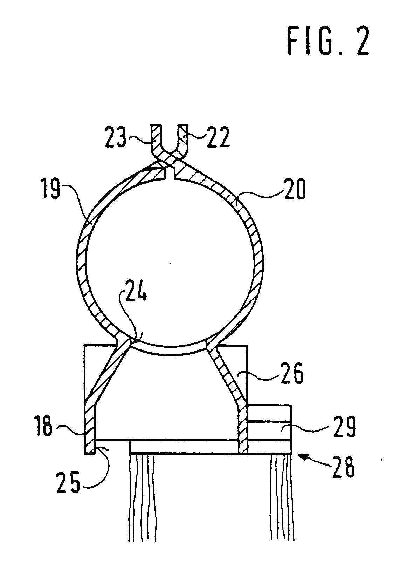

Ein Ausführungsbeispiel der Erfindung ist in der Zeichnung dargestellt und in der nachfolgenden Beschreibung näher erläutert. Figur 1 zeigt einen Längsschnitt durch die Grundplatte der Fräse und die Staubabsaugeinrichtung, Figur 2 zeigt einen Querschnitt gemäß Linie II-II in Figur 1.

### Beschreibung des Ausführungsbeispiels

Die als Oberfräse 1 ausgebildete, bekannte Handfräse besteht im wesentlichen aus einer Grundplatte 2 und einem Motorgehäuse 3, die über Säulen 4 höhenverstellar miteinander verbunden sind. Aus dem Motorgehäuse heraus ragt ein Fräswerkzeug 5, das durch einen Durchbruch 6 in der Grundplatte 2 greift. Das Werkzeug 5 schneidet bei Rotation in ein Werkstück 7 eine Ausnehmung bzw. Fräsnut 8 ein.

Eine Spanabsaugeinrichtung 10 ist mittels nicht gezeigter Schrauben oder Rastverschlüsse an der Grundplatte 2 der Fräse 1 befestigt. Die Absaugvorrichtung 10 weist oberhalb des Durchbruchs 6 eine unten offene, glockenförmige erste Absaugmündung 11 auf, die an der der Grundplatte abgewandten Oberseite eine Öffnung 12 zum Durchtritt des Fräswerkzeugs aufweist. Die Absaugmündung 11 geht in einen schräg nach oben führenden Verbindungsstutzen 13 über, an den sich ein Mittelteil 14 mit kreisrundem, rohrförmigem Querschnitt und parallel zur Grundplatte 2 liegender Achse anschließt. Das Mittelteil 14 hat an seiner Rohraußenseite eine breite, flache Ringnut 15, in deren Bereich auf der dem Werkstück zugerichteten Seite eine im Ausführungsbeispiel rechteckige Öffnung 16 angeordnet ist. An das Mittelteil 14 schließt sich übergangslos ein Anschlußstutzen 17 zum Aufstecken eines nicht gezeigten Absaugschlauches eines Sauggebläses an.

Am Mittelteil 14 ist ein Ansaugstutzen 18 in der Weise befestigt, daß zwei an den Ansaugstutzen 18 angeformte, gebogene Klemmarme 19, 20 das Mittelteil 14 umgreifen und in die flache Ringnut 15 eingreifen (siehe Figur 2). Sie werden dort durch Klemmkraft gehalten. Der Klemmarm 19 hat an seinem freien Ende zwei 21, 22 und der Klemmarm 20 einen Betätigungsfortsatz 23, die sich scherenartig überkreuzen.

Der Ansaugstutzen 18 weist oben einen Durchgang 24 und an seinem unteren Ende eine an das Werkstück 7 anlegbare Absaugmündung 25 auf, die auf derselben Ebene wie die Sohle der Grundplatte 2 liegt. Diese gegenüber der ersten Absaugmündung 11 zweite Absaugmündung 25 hat eine verdickte Rückwand 26, in der quer zur Achse des Mittelteils 14 ein zweiseitiges unten und seitlich offenes Sägezahnprofil 27 schlitzartig eingearbeitet ist.

In das Sägezahnprofil 27 ist ein Besen 28 einsetzbar, der ein Heft 29 mit einem dem Profil 27 entsprechenden Profil 30 besitzt und der mit seinen Haaren bis auf den Grund der in das Werkstück 7 eingefrästen Nut 8 reicht. Der Stutzen 18 und der Besen 28 sind mindestens so breit wie die maximale Nutbreite, die mit der Fräse erzeugbar ist.

Die Spanabsaugeinrichtung 10 ist je nach Bedarf aus der Grundplatte 2 herausnehmbar oder in sie einsetzbar. Vor Beginn der Fräsarbeiten wird der Besen 28 durch seitliches Einschieben in Höhe einer der Stufen des Sägezahnprofils 27 so in der Rückwand 26 befestigt, daß die Haare des Besens mindestens bis zum Grund der Nut 8 reichen.

Beim Fräsen wird der Besen 28 in die gefräste Nut 8 eingesetzt bzw. greift in sie ein. Den über die erste Absaugmündung 11 nicht gesaugten, noch in der Nut 8 verbliebenen Frässpänen wird der Austritt über die Nut 8 durch den Besen 28 versperrt. Die Späne werden über den Absaugstutzen 18, den Durchgang 24 und die Öffnung 16 durch das Mittelteil 14 und den Anschlußstutzen 17 abgesaugt.

Wird die Nutabsaugung über den Ansaugstutzen 18 nicht gewünscht, so werden die Klemmarme 19, 20 durch Zusammendrücken der Betätigungsfortsätze 21, 22, 23 aufgespreizt und in der Ringnut 15 gedreht. Der Anschlußstutzen 18 steht nun seitlich weg und die Öffnung 16 wird durch einen der Klemmarme 19, 20 verschlossen.

Zum Beispiel für Reinigungszwecke kann der Ansaugstutzen 18 auch ganz entfernt werden, indem die Klemmarme 19, 20 durch starkes Zusammendrücken der Betätigungsfortsätze 21, 22, 23 soweit auseinandergespreizt werden, daß sie aus der Ringnut 15 herausgenommen werden können.

Die Erfindung beschränkt sich nicht auf das dargestellte Ausführungsbeispiel. So kann die zweite Absaugmündung auch direkt in die Grundplatte der Fräse eingearbeitet sein oder einen völlig von dem Absaugkanal der ersten Absaugmündung getrennten Kanal aufweisen. Der Besen kann in beliebiger Weise an der Spanabsaugeinrichtung befestigt sein, insbesondere auch durch Schraub- oder Schnappverbindungen. Statt der Haare kann der Besen auch mit Reifen irgendeines anderen elastischen Materials ausgerüstet sein. Die Dichtfunktion gegenüber der Nut kann auch durch einen sonstigen elastischen Körper übernommen werden, der sich an die Form der Fräsnut anpaßt.

## Patentansprüche

1. Als Handgerät ausgebildete, mit ihrer Grundplatte (2) auf der zu bearbeitenden Werkstückoberfläche aufliegende Fräse (1), deren Fräswerkzeug (5) durch einen Durchbruch (6) in der Grundplatte (2) greifend spanabhebend in das Werkstück (7) eindringt und beim Verschieben der Fräse (1) eine Ausnehmung im Werkstück (7) erzeugt und mit einer einen Anschlußstutzen (17) und eine erste Absaugmündung (11) aufweisenden Spanabsaugeinrichtung (10) ausgestattet ist, dadurch gekennzeichnet, daß die erste Absaugmündung (11) im Bereich des Durchbruchs (6) der Grundplatte (2) ausgebildet ist und zusätzlich zur ersten Absaugmündung (11) eine zweite Absaugmündung (25) vorgesehen ist, die im Bereich einer gefrästen nutartigen Ausnehmung (8) am Werkstück (7) ausmündet und über einen Ansaugstutzen (18) mit einer verschließbaren Öffnung (16) der Spanabsaugeinrichtung (10) verbunden ist.

2. Fräse nach Anspruch 1, dadurch gekennzeichnet, daß die Spanabsaugeinrichtung (10) ein rohrförmiges Teil (14) mit kreisrundem Querschnitt aufweist, um das der Ansaugstutzen (18) drehbar ist.

3. Fräse nach einem der Ansprüche 1 oder 2, dadurch gekennzeichnet, daß an dem Ansaugstutzen (18) zwei elastische Klemmarme (19, 20) angeordnet sind, die das Teil (14) umgreifen.

4. Fräse nach einem der vorhergehenden Ansprüche, dadurch gekennzeichnet, daß der Ansaugstutzen (18) von einer gefrästen Ausnehmung (8) wegdrehbar ist bei gleichzeitigem Verschließen der Öffnung (16).

5. Fräse nach Anspruch 3, dadurch gekennzeichnet, daß die Klemmarme (19, 20) Betätigungsfortsätze (21, 22, 23) zum Aufspreizen der Klemmarme und zum Lösen des Ansaugstutzens (18) aufweisen.

6. Fräse nach einem der vorhergehenden Ansprüche, dadurch gekennzeichnet, daß die zweite Absaugmündung (25) mit einem schürzenartig hervorstehenden, verformbarer Körper (28), insbesondere Besen, versehen ist, der in die gefräste Ausnehmung (8) einführbar ist und die Frässpäne dichtend zurückhält.

7. Fräse nach Anspruch 6, dadurch gekennzeichnet, daß der Körper (28) höhenverstellbar an einem Ansaugstutzen (18) angebracht ist, der an seinem Ende die zweite Absaugmündung (25) aufweist.

8. Fräse nach Anspruch 7, dadurch gekennzeichnet, daß in der Rückwand (26) des Ansaugstutzens (18) ein Profil (27), insbesondere Sägezahnprofil angeordnet ist, in das der Besen (28) mit seinem korrespondierenden Profil (30) am Heft (29) in mehreren Positionen einschiebbar ist.

9. Fräse nach einem der vorhergehenden Ansprüche, dadurch gekennzeichnet, daß die zweite Absaugmündung (25) mindestens so breit ist, wie der Durchmesser des größten in die Fräse einsetzbaren Fräswerkzeugs.

10. Fräse nach einem der vorhergehenden Ansprüche dadurch gekennzeichnet, daß die zweite Absaugmündung (25) außerhalb der Grundplatte (2) der Fräse am Werkstück (7) anliegt.

## Claims

1. Milling machine (1) which is in the form of a hand apparatus and lies with its base plate (2) on the surface of the workpiece to be machined and whose milling tool (5) extends through an opening (6) in the base plate (2) to penetrate into and mill the workpiece (7) and, when the milling machine (1) makes a translatory movement, forms a recess in the workpiece (7), and which is equipped with a chip exhaust device (10) having a connection piece (17) and a first exhaust mouth (11), characterised in that the first exhaust mouth (11) is formed in the region of the opening (6) in the base plate (2) and, additionally to the first exhaust mouth (11), a second exhaust mouth (25) is provided, which leads out into the region of a milled groove-like recess (8) in the workpiece (7) and is connected via a suction intake connection piece (18) to a closable opening (16) in the chip exhaust device (10).

2. Milling machine according to Claim 1, characterised in that the chip exhaust device (10) has a tubular part (14) which has a circular cross-section and around which the suction intake connection piece (18) is rotatable.

3. Milling machine according to either of Claims 1 or 2, characterised in that two elastic clip arms (19, 20) are disposed on the suction intake connection piece (18) and engage around the part (14).

4. Milling machine according to one of the preceding claims, characterised in that the suction intake connection piece (18) can be turned away from a milled recess (8) and at the same time close the opening (16).

5. Milling machine according to Claim 3, characterised in that the clip arms (19, 20) are provided with operating extensions (21, 22, 23) for opening out the clip arms and detaching the suction intake connection piece (18).

6. Milling machine acording to one of the preceding claims, characterised in that the second exhaust mouth (25) is provided with a deformable apron-like projecting member (28), particularly a brush, which can be inserted into the milled groove (8) and sealingly retains the milling chips.

7. Milling machine according to Claim 6, characterised in that the member (28) is mounted for vertical adjustment on a suction intake connection piece (18) which is provided at its end with the second exhaust mouth (25).

8. Milling machine according to Claim 7, characterised in that in the rear wall (26) of the suction intake connection piece (18) a profile (27), particularly a saw tooth profile, is provided into which the brush (28) can be inserted by its corresponding profile (30) on the handle (29) in a plurality of positions.

9. Milling machine according to one of the preceding claims, characterised in that the second exhaust mouth (25) is at least as wide as the diameter of the largest milling tool that can be inserted into the milling machine.

10. Milling machine according to one of the preceding claims, characterised in that the second exhaust mouth (25) lies against the workpiece (7) outside the base plate (2) of the milling machine.

## Revendications

1. Fraiseuse (1) réalisée comme un outil à main, reposant par sa plaque de base (2) sur la surface de la pièce à usiner, fraiseuse dont l'outil de fraisage (5) pénètre par un passage (6) dans la plaque de base (2) en venant en prise par enlèvement de copeaux dans la pièce (7) et lors de l'avancement de la fraise (1) produit un évidement dans la pièce (7) et qui est équipée d'un dispositif d'aspiration de copeaux (10) présentant un ajutage de raccordement (17) et une première bouche d'aspiration (11), fraiseuse caractérisée en ce que la première bouche d'aspiration (11) est formée dans la zone du passage (6) de la plaque de base (2) et en ce qu'il est prévu en plus de la première bouche d'aspiration (11) une deuxième bouche d'aspiration (25), qui débouche dans la zone d'un évidement (8) fraisé ayant la forme d'une rainure sur la pièce (7) et est reliée par un ajutage d'aspiration (18) à une ouverture (16) pouvant être fermée du dispositif d'aspiration de copeaux (10).

2. Fraiseuse selon la revendication 1, caractérisée en ce que le dispositif d'aspiration de copeaux (10) présente une partie de forme tubulaire (4) avec une section transversale circulaire, autour duquel peut tourner l'ajutage d'aspiration (18).

3. fraiseuse selon l'une des revendications 1 ou 2, caractérisée en ce que sur l'ajutage d'aspiration (18) sont disposés deux bras élastiques de serrage (19, 20), qui saisissent la pièce (14).

4. Fraiseuse selon l'une des revendications précédentes, caractérisée en ce que l'ajutage d'aspiration (18) peut être écarté en tournant d'un évidement fraisé (8) en fermant en même temps l'ouverture (16).

5. Fraiseuse selon la revendication 3, caractérisée en ce que le bras de serrage (19, 20) présentent des appendices d'actionnement (21, 22, 23) pour écarter les bras de serrage et pour détacher l'ajutage d'aspiration (18).

6. Fraiseuse selon l'une des revendications précédentes, caractérisée en ce que la deuxième bouche d'aspiration (25) est pourvu d'un corps déformable, faisant saillie à la manière d'une jupe (28), en particulier d'un balai, qui est introduit dans l'évidement fraisé (8) et qui retint de façon étanche les copeaux de fraisage.

7. Fraiseuse selon la revendication 6, caractérisée en ce que le corps (28) est disposé de façon réglable en hauteur sur un ajutage d'aspiration (18) qui présente à son extrémité la deuxième bouche d'aspiration (25).

8. Fraiseuse selon la revendication 7, caractérisé en ce que dans la paroi arrière (26) de l'ajutage d'aspiration (18)est disposé un profilé en particulier un profilé en dent de scie dans lequel le balai (28) peut être enfoncé par son profilé correspondant (30) sur le manche (29) dans plusieurs positions.

9. Fraiseuse selon l'une des revendications précédentes, caractérisée en ce que la deuxième bouche d'aspiration (25) est au moins aussi large que le diamètre du plus grand outil de fraisage monté sur la fraiseuse.

10. Fraiseuse selon l'une des revendications précédentes, caractérisée en ce que la deuxième bouche d'aspiration (25) repose en dehors de la plaque de base (2) de la fraiseuse sur la pièce (7).
